# EUROPEAN PATENT APPLICATION

(11) **EP 2 369 550 A1**
(43) Date of publication of application: **28.09.2011**
(21) Application number: 09830106.2
(22) Date of filing: 10.03.2009
(51) Int. Cl.: G06T 1/00

(54) **VOUCHER READING APPARATUS, METHOD, AND SYSTEM**

(30) Priority: 05.12.2008 JP 2008310647
(71) Applicant: Panasonic Corporation, Kadoma-shi Osaka 571-8501 (JP)
(72) Inventor: FUKUI, Kazuaki, Chuo-Ku, Osaka-shi Osaka 540-6207 (JP); SAITOH, Kazuki, Chuo-Ku, Osaka-shi Osaka 540-6207 (JP); KINOSHITA, Hidetoshi, Chuo-Ku, Osaka-shi Osaka 540-6207 (JP)
(74) Representative: Kügele, Bernhard
(86) International application number: PCT/JP2009/001075
(87) International publication number: WO 2010/064335

(57) **Abstract**

A document reading device (2) includes a camera (6) for optically reading an image of a reading area provided in a passport (P), a chip presence or absence determining unit (16) for determining whether or not an IC chip is mounted in the passport (P), a chip presence or absence indication displaying unit (10) for displaying the result of the determination, and an antenna unit (8) configured such that when it is determined that the passport (P) includes an IC chip mounted therein, the antenna unit reads data recorded in the IC chip, by radio communication. The chip presence or absence determining unit (10) determines whether or not the passport (P) includes an IC chip mounted therein before the camera (6) reads an image of the reading area of the passport (P). As described above, a document reading device is provided in which workability in reading a document can be improved even when documents with IC chips mounted therein and documents with no IC chip mounted therein coexist.

## Description

### Technical Field

The present invention relates to a document reading device with a document reading function, and in particular, to a technique for improving workability in reading a document.

### Background Art

Document reading devices for reading documents such as passports are conventionally known and used, for example, for immigration checks at airports. For example, Japanese Patent Laid-Open No. 2006-146328 discloses such a document reading device. The conventional document reading device provides a function to optically read a reading area (an area to be read) provided in a passport to display the result of the reading on a screen.

With the recent prevalence of passports with IC chips mounted therein, an increasing number of document reading devices provide a function to read data recorded in the IC chip. In connection with reading of data from the IC chip, the contents of the IC chip may be read using the results of optical reading. Thus, the conventional reading device optically reads the reading area of a passport, and then determines whether or not the passport includes an IC chip mounted therein. If the passport includes an IC chip mounted therein, the reading result obtained is used to read data from the IC chip.

However, not a few countries in the world have failed to switch to passports with IC chips mounted therein (not a few countries in the world still use passports with no IC chip mounted therein). Thus, passports carried by immigrants are actually a mixture of those with IC chips mounted therein and those with no IC chip mounted therein. However, the conventional document reading device does not take into account the mixture of passports with IC chips mounted therein and passports with no IC chip mounted therein.

For passports with no IC chip mounted therein, the reading area may simply be optically read. This optical reading process is completed in a relatively short time. On the other hand, for passports with IC chips mounted therein, data is read from the IC chip after reading of the reading area. This reading process on the IC chip requires a relatively long time. An operator needs to hold the passport on a reading surface until the process is completed.

However, when passports with IC chips mounted therein and passports with no IC chip mounted therein coexist, the operator may sometimes bring a passport, which the operator incorrectly considers that it includes no IC chip mounted therein, off from the reading surface even though the passport actually include an IC chip mounted therein (even though the operator needs to hold the passport on the reading surface for a while). Then, the reading operation on the IC chip fails. In such a case, reading of the passport needs to be started all over again.

In other cases, since the operator cannot determine whether or not each passport includes an IC chip mounted therein, the operator may hold a passport on the reading surface for a while even though the passport actually includes no IC chip mounted therein (even though the reading process otherwise completes in a short time). This reduces work efficiency (increases working hours).

### Disclosure of the Invention

### Problems to be Solved by the Invention

The present invention has been developed under the above-described background. An object of the present invention is to provide a document reading device capable of improving workability in reading a document even when documents with IC chips mounted therein and documents with no IC chip mounted therein coexist.

### Means for Solving the Problems

An aspect of the present invention is a document reading device comprising an optical reading unit for optically reading a reading area provided in a document, a chip presence or absence determining unit for determining whether or not an IC chip is mounted in the document, a chip presence or absence indication displaying unit for displaying a result of the determination, a radio reading unit configured such that when it is determined that the document includes an IC chip mounted therein, the radio reading unit reads data recorded in the IC chip, a determination timing control unit for controlling a determination timing so that whether or not an IC chip is mounted in the document is determined before an image of the reading area is read, a document placement determining unit for determining whether or not the document is placed on a reading surface, a hold indication displaying unit for providing a document hold indication indicative of need to hold the document placed on the reading surface when it is determined that the document is placed on the reading surface, and a display timing control unit for controlling a display timing such that the document hold indication is turned off when it is determined that the document includes no IC chip mounted therein.

Another aspect of the present invention is a document reading method comprising determining whether or not an IC chip is mounted in a document and displaying a result of the determination, optically reading an image of a reading area provided in the document after the determination, and when it is determined that the document includes an IC chip mounted therein, reading data recorded in the IC chip, the method further comprising determining whether or not the document is placed on a reading surface, providing a document hold indication indicative of need to hold the document placed on the reading surface when it is determined that the document is placed on the reading surface, and turning off the document hold indication when the document is determined not to be placed on the reading surface.

Another aspect of the present invention is a document reading system comprising an optical reading unit for optically reading a reading area provided in a document, a first display unit for displaying a result of reading of an image of the reading area, a chip presence or absence determining unit for determining whether or not an IC chip is mounted in the document, a chip presence or absence indication displaying unit for displaying a result of the determination, a radio reading unit configured such that when it is determined that the document includes an IC chip mounted therein, the radio reading unit reads data recorded in the IC chip, a second display unit for displaying a result of reading of data contained in the IC chip, a determination timing control unit for controlling a determination timing so that whether or not an IC chip is mounted in the document is determined before an image of the reading area is read, a document placement determining unit for determining whether or not the document is placed on a reading surface, a hold indication displaying unit for providing a document hold indication indicative of need to hold the document placed on the reading surface when it is determined that the document is placed on the reading surface, and a display timing control unit for controlling a display timing such that the document hold indication is turned off when it is determined that the document includes no IC chip mounted therein.

As described below, the present invention includes other aspects. Thus, the disclosure of the present invention is intended to provide some of the aspects of the present invention and not to limit the scope of the present invention described and claimed herein.

### Brief Description of the Drawings

Figure 1 is a diagram illustrating the general configuration of a document reading system according the present embodiment;
Figure 2 is a perspective view of a document reading device according to the present embodiment;
Figure 3 is a block diagram showing the configuration of a control unit of the document reading device;
Figure 4 is a diagram showing an example of a display screen for the results of reading; and
Figure 5 is a flowchart illustrating a flow of operation of the document reading device according to the present embodiment.

### Description of Symbols

- 1: Document reading system
- 2: Document reading device
- 3: High level device
- 4: Screen
- 5: Reading surface
- 6: Camera
- 7: Illumination unit
- 8: Antenna unit
- 9: Document hold indication displaying unit
- 10: IC chip presence indication displaying unit
- 11: Control unit
- 12: Imaging control unit
- 13: Communication control unit
- 14: Optical character recognition processing unit
- 15: Document placement determining unit
- 16: Chip presence or absence determining unit
- 17: Determination timing control unit
- 18: Display timing control unit
- 19: First display frame
- 20: Second display frame
- P: Passport

### Best Mode for Carrying Out the Invention

The present invention will be described below in detail. However, the detailed description below and the accompanying drawings are not intended to limit the present invention. Instead, the scope of the present invention is defined by the accompanying claims.

A document reading device according to the present invention includes an optical reading unit for optically reading a reading area provided in a document, a chip presence or absence determining unit for determining whether or not an IC chip is mounted in the document, a chip presence or absence indication displaying unit for displaying a result of the determination, a radio reading unit configured such that when it is determined that the document includes an IC chip mounted therein, the radio reading unit reads data recorded in the IC chip, a determination timing control unit for controlling a determination timing so that whether or not an IC chip is mounted in the document is determined before an image of the reading area is read, a document placement determining unit for determining whether or not the document is placed on a reading surface, a hold indication displaying unit for providing a document hold indication indicative of need to hold the document placed on the reading surface when it is determined that the document is placed on the reading surface, and a display timing control unit for controlling a display timing such that the document hold indication is turned off when it is determined that the document includes no IC chip mounted therein.

Even when documents with IC chips mounted therein and documents with no IC chip mounted therein coexist, this configuration pre-determines whether or not an IC chip is mounted in each document (the determination is made before the reading area is read). The determination result is displayed. Thus, if the document includes an IC chip mounted therein, this can be known in advance via a pre-display (IC chip presence indication). Hence, the document is held on the reading surface until a sufficient time to read data contained in the IC chip elapses. That is, a possible situation can be prevented in which an operator considers that this document includes no IC chip mounted therein and brings the document off from the reading surface (a possible failure in reading operation on the IC chip can be prevented). Furthermore, if the document includes no IC chip mounted therein, this can be known in advance via a pre-display (IC chip absence indication). Thus, once the optical reading of the document is completed, the next operation can be immediately started. That is, the document is prevented from being held on the reading surface for a while. This leads to increased work efficiency (reduced working hours).

Moreover, in this configuration, the document hold indication is provided when the document is placed on the reading surface. When it is determined that the document includes no IC chip mounted therein, the document hold indication is turned off. For example, the document hold indication is turned off, for example, after the optical reading is completed. Alternatively, since the presence or absence of an IC chip is detected after the document is placed on the reading surface, with the reading result displayed in a short time after the placement, when the document includes no IC chip mounted therein, the document hold indication may be controllably omitted (the document hold indication may be kept off from the beginning) so as to prevent the operator from being confused. By performing operations in accordance with such a document hold indication, the operator can immediately start the next operation if the document includes no IC chip mounted therein. This leads to increased work efficiency (reduced working hours). On the other hand, if the document includes an IC chip mounted therein, the document hold indication remains on. Thus, by performing operations in accordance with the document hold indication (by leaving the document on the reading surface), the operator can prevent a possible failure in reading operation on the IC chip.

Furthermore, the document reading device according to the present invention may be configured to read data contained in the IC chip using the reading result for the image of the reading area.

As described above, even if the data contained in the IC chip is read using the result of the optical reading, the document reading device predetermines whether or not the document includes an IC chip mounted therein (the determination is made before the reading area is read). The determination result can be known in advance via a pre-display. Thus, even when documents with IC chips mounted therein and documents with no IC chip mounted therein coexist, the reading operation can be performed depending on the presence or absence of an IC chip. As a result, the workability in reading a document is improved.

A document reading method comprises determining whether or not an IC chip is mounted in a document and displaying a result of the determination, optically reading an image of a reading area provided in the document after the determination, and when it is determined that the document includes an IC chip mounted therein, reading data recorded in the IC chip. The document reading method comprises determining whether or not the document is placed on a reading surface, providing a document hold indication indicative of need to hold the document placed on the reading surface when it is determined that the document is placed on the reading surface, and turning off the document hold indication when the document is determined not to be placed on the reading surface.

Also in this method, if the document includes an IC chip mounted therein, this can be known in advance via a pre-display (IC chip presence indication). This allows prevention of a possible situation in which the operator considers that this document includes no IC chip mounted therein and brings the document off from the reading surface (prevention of a possible failure in reading operation on the IC chip). Furthermore, if the document includes no IC chip mounted therein, this can be known in advance via a pre-display (IC chip absence indication). Thus, once the optical reading of the document is completed, the next operation can be immediately started. This leads to increased work efficiency (reduced working hours).

Moreover, in this method, when the document includes no IC chip mounted therein, the document hold indication is turned off. For example, the document hold indication is turned on when the document is placed on the reading surface. The document hold indication is turned off after the optical reading is completed. Alternatively, since the presence or absence of an IC chip is detected after the document is placed on the reading surface, with the reading result displayed in a short time after the placement, when the document includes no IC chip mounted therein, the document hold indication may be controllably omitted (the document hold indication may be kept off from the beginning) so as to prevent the operator from being confused. By performing operations in accordance with such a document hold indication, the operator can immediately start the next operation. This leads to increased work efficiency (reduced working hours). On the other hand, if the document includes an IC chip mounted therein, the document hold indication remains on. Thus, by performing operations in accordance with the document hold indication (by leaving the document on the reading surface), the operator can prevent a possible failure in reading operation on the IC chip.

Furthermore, in the document reading method according to the present invention, data contained in the IC chip may be read using the reading result for the image of the reading area.

This method predetermines whether or not the document includes an IC chip mounted therein (the determination is made before the reading area is read) even if the data contained in the IC chip is read using the result of the optical reading. The determination result can be known in advance via a pre-display. Thus, even when documents with IC chips mounted therein and documents with no IC chip mounted therein coexist, the reading operation can be performed depending on the presence or absence of an IC chip. As a result, the workability in reading a document is improved.

A document reading system according to the present invention comprises an optical reading unit for optically reading a reading area provided in a document, a first display unit for displaying a result of reading of an image of the reading area, a chip presence or absence determining unit for determining whether or not an IC chip is mounted in the document, a chip presence or absence indication displaying unit for displaying a result of the determination, a radio reading unit configured such that when it is determined that the document includes an IC chip mounted therein, the radio reading unit reads data recorded in the IC chip, a second display unit for displaying a result of reading of data contained in the IC chip, a determination timing control unit for controlling a determination timing so that whether or not an IC chip is mounted in the document is determined before an image of the reading area is read, a document placement determining unit for determining whether or not the document is placed on a reading surface, a hold indication displaying unit for providing a document hold indication indicative of need to hold the document placed on the reading surface when it is determined that the document is placed on the reading surface, and a display timing control unit for controlling a display timing such that the document hold indication is turned off when it is determined that the document includes no IC chip mounted therein.

Also in this system, if the document includes an IC chip mounted therein, this can be known in advance via a pre-display (IC chip presence indication). This allows prevention of a possible situation in which the operator considers that this document includes no IC chip mounted therein and brings the document off from the reading surface (prevention of a possible failure in reading operation on the IC chip). Furthermore, if the document includes no IC chip mounted therein, this can be known in advance via a pre-display (IC chip absence indication). Thus, once the optical reading of the document is completed, the next operation can be immediately started. This leads to increased work efficiency (reduced working hours). Further, by performing operations in accordance with the document hold indication, the operator can immediately start the next operation. This leads to increased work efficiency (reduced working hours). On the other hand, if the document includes an IC chip mounted therein, the document hold indication remains on. Thus, by performing operations in accordance with the document hold indication (by leaving the document on the reading surface), the operator can prevent a possible failure in reading operation on the IC chip.

The present invention includes the chip presence or absence determining unit for determining whether or not a document includes an IC chip mounted therein before the document is optically read. Thus, even when documents with IC chips mounted therein and documents with no IC chip mounted therein coexist, the workability in reading a document can be improved.

The document reading device according to an embodiment of the present invention will be described below with reference to the drawings. The document reading device according to the present embodiment is a passport reading device used for immigration checks at an airport. The document reading device according to the present invention is not limited to this aspect. Examples of the document reading device according to the present invention include a reading device for airplane boarding passes, a passport reading device used at a front desk in a hotel, or a reading device for other identification cards.

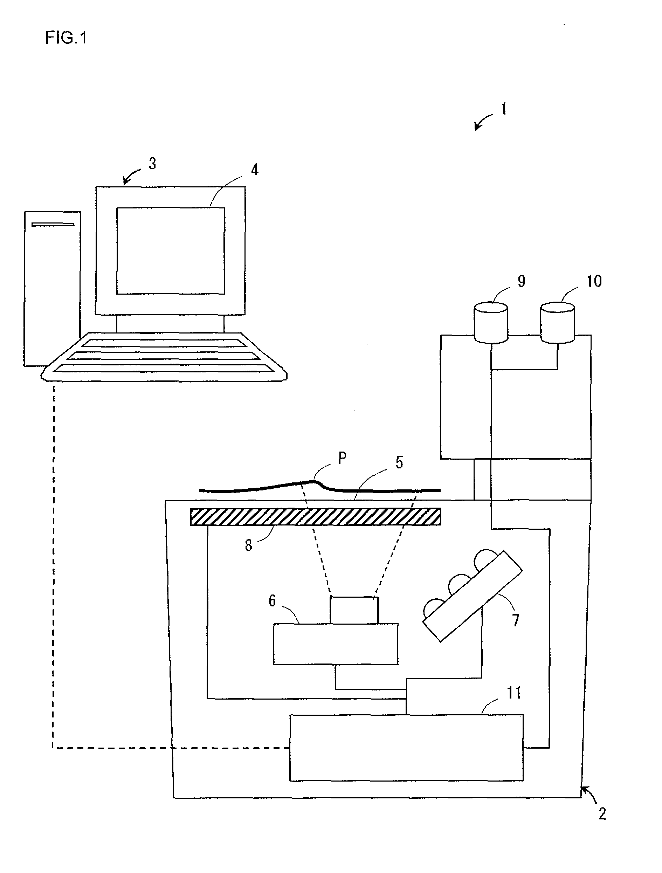

First, the general configuration of the document reading system according to the embodiment of the present invention will be described with reference to the drawings. Figure 1 is a diagram illustrating the configuration of the document reading system according to the present embodiment. As shown in Figure 1, the document reading system 1 includes a document reading device 2 for reading passports, and a high level device 3 (for example, a personal computer) to which data read by the document reading device 2 (the data relates to the result of the reading) is transmitted. The high level device 3 includes a screen 4 on which the data on the result of the reading is displayed. In the example illustrated in the present embodiment, the high level device 3 is separate from the document reading device 2. However, the high level device 3 and the document reading device 2 may be integrated together (the functions of the high level device 3 may be integrated into the document reading device 2).

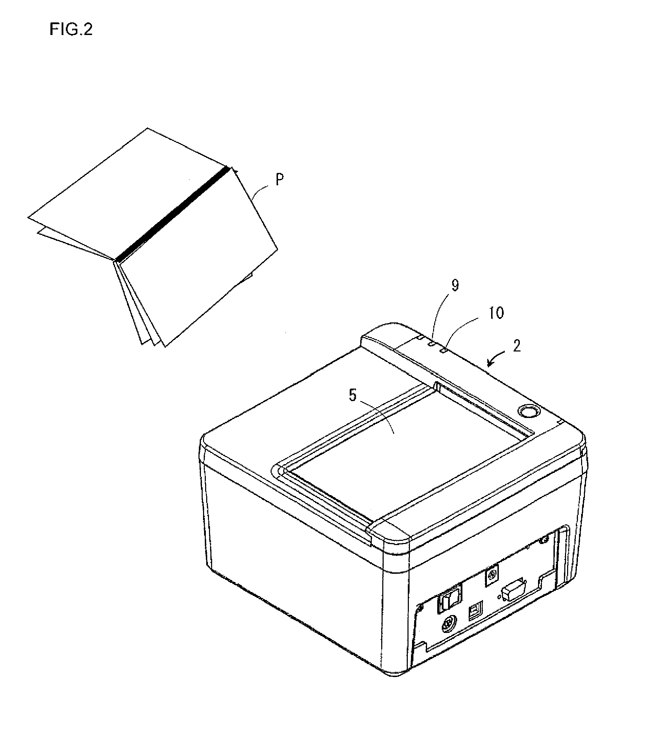

Now, the configuration of the document reading device 2 will be described with reference to Figure 1 and Figure 2. Figure 2 is a perspective view of the document reading device 2. As shown in Figure 1 and Figure 2, a reading surface 5 on which a passport is placed is provided on the top surface of document reading device 2. A passport is placed on the reading surface 5 with a page open and down.

The document reading device 2 contains a camera 6 for optically reading contents described on the passport placed on the reading surface 5, and an illumination unit 7 for illuminating the passport placed on the reading surface 5, from below. The passport includes a reading area to be mechanically read. The camera 6 is configured to be capable of taking an image of the reading area of the passport illuminated by the illumination unit 7, from below through a transparent glass plate. Here, the camera 6 corresponds to an optical reading unit according to the present invention.

The document reading device 2 also contains an antenna unit 8 for communicating wirelessly with the IC chip mounted in the passport. The antenna unit 8 is arranged immediately below the reading surface 5 so as to surround the passport placed on the reading surface 5. The antenna unit 8 allows data recorded in the IC chip in the passport to be read by radio communication. Here, the antenna unit 8 corresponds to a radio reading unit according to the present invention.

Two indication displaying units (a document hold indication displaying unit 9 and an IC chip presence indication displaying unit 10) are provided at an end of top surface of the document reading device 2. The document hold indication displaying unit 9 provides a document hold indication indicative of need to hold the passport placed on the reading surface 5. In this case, the document hold indication displaying unit 9 is formed of an LED and controlled so as to turn on the LED when the passport is to be held on the reading surface 5. The document hold indication displaying unit 9 corresponds to a hold indication displaying unit.

The IC chip presence indication displaying unit 10 provides an IC chip presence indication indicating that an IC chip is mounted in the passport placed on the reading surface 5. In this case, the IC chip presence indication displaying unit 10 is formed of an LED and controlled to turn on the LED when an IC chip is mounted in the passport placed on the reading surface 5. The IC chip presence indication displaying unit corresponds to a chip presence or absence indication displaying unit. As described below, the document hold indication displaying unit 9 is controlled to turn off the LED when no IC chip is mounted in the passport placed on the reading surface 5. Furthermore, the operator may be confused when either of the LEDs remains on even for a short time. Thus, in view of workability, it is also preferable to avoid lighting both indications when no IC chip is mounted in the document. Thus, in other words, the document hold indication displaying unit 9 corresponds to the chip presence or absence indication displaying unit.

The document reading device 2 contains a control unit 11 formed of a CPU, a microcomputer, or the like. The control unit 11 provides a function to control the operation of the camera 6, the illumination unit 7, the antenna unit 8, and the indication displaying unit (the document hold indication displaying unit 9 and the IC chip presence indication displaying unit 10).

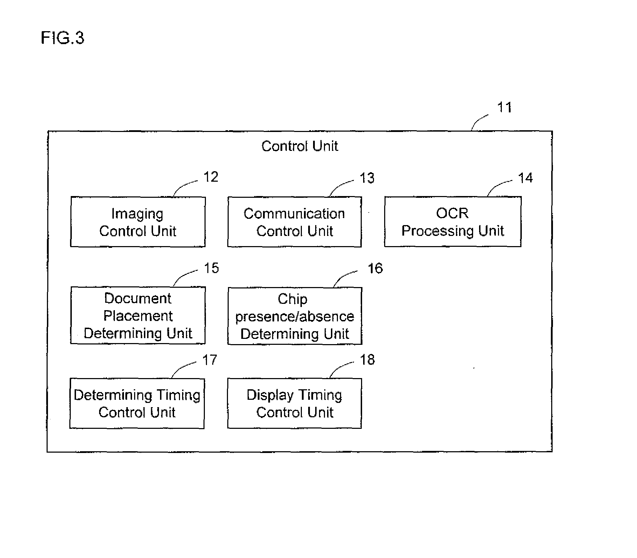

Figure 3 is a block diagram showing a configuration for realizing the functions of the control unit. As shown in Figure 3, the control unit 11 includes an imaging control unit 12 for controlling the operation of the camera 6 and the illumination unit 7, and a communication control unit 13 for controlling the operation of the antenna unit 8. The control unit 11 further includes an optical character recognition processing unit 14 for carrying out an optical character recognition process (OCR process) on an image of the reading area taken by the camera 6.

The control unit 11 further includes a document placement determining unit 15 for determining whether or not a passport has been placed on the reading surface 5, and a chip presence or absence determining unit 16 for determining whether or not the passport contains an IC chip based on the result of radio communication from the antenna unit 8 (the result indicates whether or not the antenna unit 8 has received a response from an IC chip as a result of polling). Here, the document placement determining unit 15 corresponds to a document placement determining unit according to the present invention. The chip presence or absence determining unit 16 corresponds to a chip presence or absence determining unit according to the present invention. Additionally, it may be preferable to avoid turning on the indications when no IC chip is mounted in the document.

The control unit 11 includes a determination timing control unit 17 for determining a timing when the chip presence or absence determining unit 16 carries out a process of determining the presence or absence of an IC chip. Based on the timing control performed by the determination timing control unit 17, the imaging control unit 12 and the communication control unit 13 control operation timings for the camera 6 and the antenna unit 8 so that whether or not an IC chip is mounted in the passport is determined before the process of optically reading the image of the reading area is carried out. Here, the determination timing control unit 17 corresponds to a determination timing control unit according to the present invention.

The control unit 11 further includes a display timing control unit 18 for controlling timings when the indication displaying unit (the document hold indication displaying unit 9 and the IC chip presence indication displaying unit 10) turns on and off the indications. Specifically, based on the timing control performed by the display timing control unit 18, the document hold indication displaying unit 9 and the IC chip presence indication displaying unit 10 are controlled to provide the indications. Specifically, the document hold indication displaying unit 9 is controlled to turn on the indication when a passport is placed on the reading surface 5. The document hold indication displaying unit 9 is further controlled as follows: if the passport includes an IC chip mounted therein, the indication is turned off after the reading operation on the IC chip is completed, and if the passport includes no IC chip mounted therein, the indication is turned off after the optical reading is completed. On the other hand, the IC chip presence indication displaying unit 10 is controlled to turn on the indication when it is determined that the document includes an IC chip mounted therein and to turn off the indication after the reading carried out the IC chip is completed. Here, the display timing control unit 18 corresponds to a display timing control unit according to the present invention.

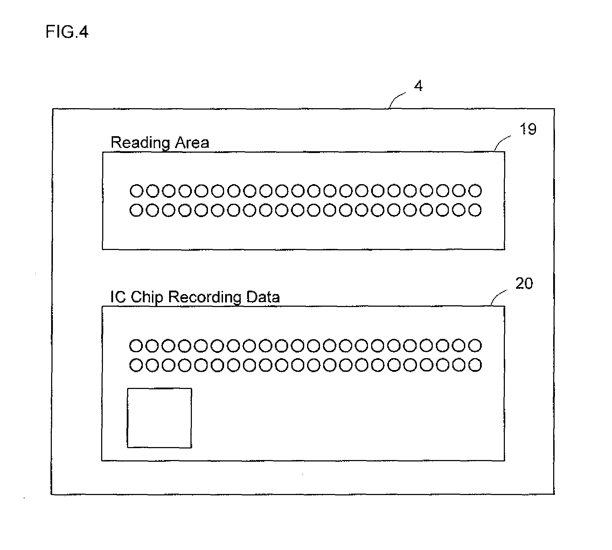

Now, screen display in the high level device 3 will be described. Figure 4 is a diagram showing an example of screen display. As shown in Figure 4, a screen 4 includes two display frames. A first display frame 19 (an upper frame in Figure 4) displays the reading result for the reading area of the passport. A second display frame 20 (a lower frame in Figure 4) displays the reading result for the IC chip (the data contained in the IC chip). The operator views the reading results displayed in the two display frames to carry out checks such as identification of the passport holder and authentication of the passport. Here, the first display frame 19 corresponds to a first display unit according to the present invention. The second display frame 20 corresponds to a second display unit according to the present invention.

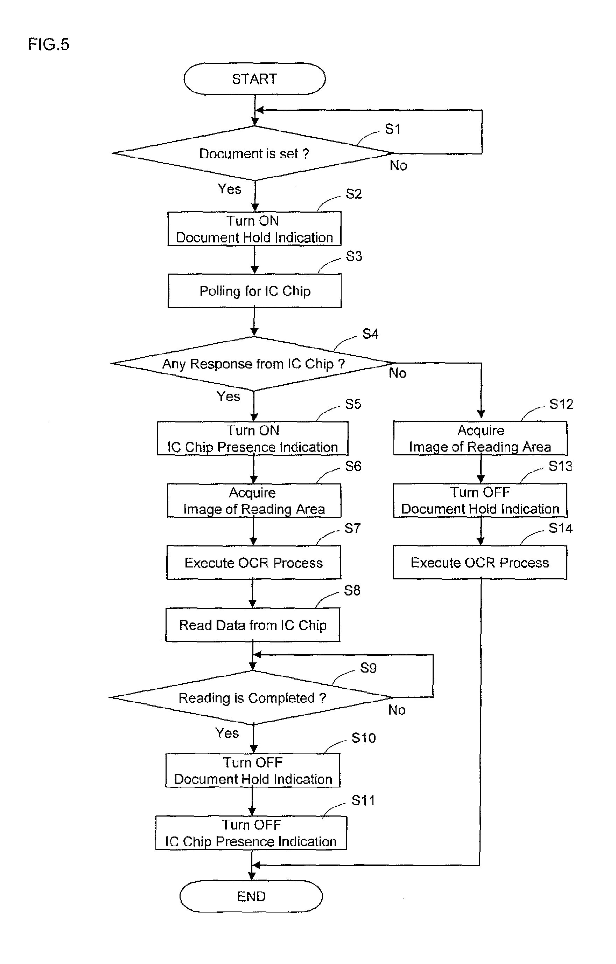

The operation of the document reading system 1 configured as described above will be described with reference to Figure 5.

An operation of reading a passport using the document reading system according to the present embodiment is performed as follows. First, the passport is placed on the reading surface 5 with a page open and down. Then, the document placement determining unit 15 determines whether or not a passport is placed on the reading surface 5, based on an image taken by the camera 6 (S1). When the document placement determining unit 15 determines that a passport is placed on the reading surface 5, the LED in the document hold indication displaying unit 9 is turned on (S2). The antenna unit 8 starts polling for an IC chip (S3).

If the antenna unit 8 receives a response from an IC chip as a result of the polling (S4), the system determines that an IC chip is mounted in the passport to turn on the IC chip presence indication LED (S5). When the IC chip presence indication LED is turned on, the operator knows that an IC chip is mounted in the IC chip. The operator holds the passport placed on the reading surface 5 in accordance with the indication. Furthermore, it is also preferable to shift step (S2) to between step (S4) and step (S5) to omit the document hold indication when no IC chip is mounted in the passport, because this reduces the possibility of confusing the operator; this process is not shown in Figure 5.

Thereafter, the document reading device 2 takes an image of the reading area of the passport using the camera 6 (S6), and then carries out a optical character recognition process on the taken image (S7). Information (reading result) read from the reading area is displayed in the first display frame 19 of the screen 4 in the high level device 3.

Then, the document reading device 2 reads data recorded in the IC chip (S8). When the reading of the data contained in the IC chip is completed (S9), the data on the reading result is displayed in the second display frame 20 of the screen 4 in the high level device 3. Then, the document hold indication LED is turned off (S10), and the IC chip presence indication is turned off (S11).

On the other hand, when there is no response to the polling (S4), the system determines that no IC chip is mounted in the passport. The system then takes an image of the reading area of the passport using the camera 6 (S12). At this time, the document hold indication LED is turned off (S13). Thereafter, an optical character recognition process is carried out on the taken image (S14). The result of this reading is displayed in the first display frame 19 of the screen 4 in the high level device 3. As described above, when the document hold indication LED is turned off (with the IC chip presence indication kept off), the operator can know that no IC chip is mounted in the passport. That is, turning-off of the document hold indication indicates that no chip is mounted in the passport.

The document reading device 2 according to the embodiment of the present invention configured as described above includes the chip presence or absence determining unit for determining whether or not an IC chip is mounted in the passport before the passport is optically read. Thus, even when passports with IC chips mounted therein and passports with no IC chip mounted therein coexist, the workability in reading the passport can be improved.

That is, even when passports with IC chips mounted therein and passports with no IC chip mounted therein coexist, the present embodiment predetermines whether or not an IC chip is mounted in the passport (the determination is made before the reading area is read), with the result of the determination displayed. Thus, if the document includes an IC chip mounted therein, this can be known in advance via the pre-display (IC chip presence indication). Thus, the document is held on the reading surface 5 until a sufficient time to read the data contained in the IC chip elapses. That is, a possible situation can be prevented in which the operator considers that this passport includes no IC chip mounted therein and brings the passport off from the reading surface 5 (a possible failure in reading operation on the IC chip can be prevented). Furthermore, if the document includes no IC chip mounted therein, this can be known in advance via the pre-display (IC chip absence indication). Thus, once the optical reading of the passport is completed, the next operation can be immediately started. That is, the passport is prevented from being held on the reading surface 5 for a while. This leads to increased work efficiency (reduced working hours).

Furthermore, in the present embodiment, when a passport is placed on the reading surface 5, the document hold indication is provided. When the system determines that no IC chip is mounted in the document, the document hold indication is turned off after the optical reading is completed. When operations are performed in accordance with such a document hold indication, if the passport includes no IC chip mounted therein, the next operation can be immediately started. This leads to increased work efficiency (reduced working hours). On the other hand, if the passport includes an IC chip mounted therein, the document hold indication remains on. Thus, by performing operations in accordance with the document hold indication (by leaving the document on the reading surface 5), the operator can prevent a possible failure in reading operation on the IC chip.

Furthermore, in the present embodiment, even if the data contained in the IC chip is read using the result of the optical reading, the system predetermined whether or not an IC chip is mounted in the document (the determination is made before reading the reading area). Then, the determination result can be known in advance via the pre-display. Thus, even when passports with IC chips mounted therein and passports with no IC chip mounted therein coexist, the reading operation can be performed depending on the presence or absence of an IC chip. As a result, the workability in reading a passport is improved.

In the present embodiment, during reading of the passport, the operator's gaze moves smoothly. First, the operator places the passport on the reading surface 5 and turns the operator's gaze on the document reading device 2. After the document hold indication is turned on, the IC chip presence indication is turned on or the document hold indication is turned off, depending on the determination of whether or not an IC chip is mounted in the document. The operator may turn the operator's gaze on the screen after the IC chip presence indication is turned on or the document hold indication is turned off. When the IC chip presence indication is turned on, an image of the reading area is immediately displayed in the first frame. After a while, the data contained in the IC chip is displayed in the second frame. On the other hand, when the document hold indication is turned off, an image of the reading area is immediately displayed in the first frame. As described above, the present embodiment serves to avoid useless reciprocation of the operator's gaze (movement of the operator's gaze between the document reading device 2 and the screen 4) during reading of the passport.

The embodiment of the present invention has been described by illustration. However, the scope of the present invention is not limited to the embodiment but may be changed or varied for any purpose without departing from the scope set forth in the claims.

For example, in the case illustrated in the above description, the IC chip presence indication is turned on and off. However, the scope of the present invention is not limited to this aspect. For example, the two indications, that is, the IC chip presence indication and the IC chip absence indication, may be provided, or the IC chip absence indication may be turned on and off. Alternatively, another indication (the document hold indication or a power supply indication) may be utilized to indicate the presence and absence of an IC chip.

The currently possible preferred embodiment of the present invention has been described. However, it should be appreciated that many variations may be made to the present embodiment. The accompanying claims are intended to embrace all such variations falling within the true spirit and scope of the present invention.

### Industrial Applicability

As described above, the document reading device according to the present invention is effective for improving the workability in reading a document even when documents with IC chips mounted therein and documents with no IC chip mounted therein coexist. The document reading device according to the present invention is usefully used as, for example, a passport reading device for reading passports.

## Claims

1. A document reading device **characterized by** comprising:
an optical reading unit which optically reads a reading area provided in a document;
a chip presence or absence determining unit which determines whether or not an IC chip is mounted in the document;
a chip presence or absence indication displaying unit which displays a result of the determination;
a radio reading unit which reads, when it is determined that an IC chip is mounted in the document, data recorded in the IC chip;
a determination timing control unit which controls, before an image of the reading area is read, a determination timing so that a determination whether or not an IC chip is mounted in the document is conducted;
a document placement determining unit which determines whether or not the document is placed on a reading surface;
a hold indication displaying unit which provides, when it is determined that the document is placed on the reading surface, a document hold indication indicative of need to hold the document placed on the reading surface; and
a display timing control unit which controls, when it is determined that no IC chip is mounted in the document, a display timing such that the document hold indication is turned off.

2. The document reading device according to Claim 1, **characterized in that** the radio reading unit uses a reading result for an image of the reading area to read data contained in the IC chip.

3. A document reading method **characterized by** comprising:
determining whether or not an IC chip is mounted in a document and displaying a result of the determination;
optically reading an image of a reading area provided in the document after the determination; and
reading, when it is determined that an IC chip mounted in the document, data recorded in the IC chip, the method further comprising:
determining whether or not the document is placed on a reading surface;
providing, when it is determined that the document is placed on the reading surface, a document hold indication indicative of need to hold the document placed on the reading surface; and
turning off the document hold indication when the document is determined not to be placed on the reading surface.

4. The document reading method according to Claim 3, **characterized in that** a reading result for an image of the reading area is used to read data contained in the IC chip.

5. A document reading system **characterized by** comprising:
an optical reading unit which optically reads a reading area provided in a document;
a first display unit which displays a result of reading of an image of the reading area;
a chip presence or absence determining unit which determines whether or not an IC chip is mounted in the document;
a chip presence or absence indication displaying unit which displays a result of the determination;
a radio reading unit which reads, when it is determined that an IC chip is mounted in the document, data recorded in the IC chip;
a second display unit which displays a result of reading of data contained in the IC chip;
a determination timing control unit which controls, before an image of the reading area is read, a determination timing so that a determination whether or not an IC chip is mounted in the document is conducted;
a document placement determining unit which determines whether or not the document is placed on a reading surface;
a hold indication displaying unit which provides, when it is determined that the document is placed on the reading surface, a document hold indication indicative of need to hold the document placed on the reading surface; and
a display timing control unit which controls, when it is determined that no IC chip is mounted in the document, a display timing such that the document hold indication is turned off.
